# EUROPÄISCHE PATENTSCHRIFT

(11) **EP 2 924 389 B1**
(45) Veröffentlichungstag und Bekanntmachung des Hinweises auf die Patenterteilung: **07.09.2016**
(21) Anmeldenummer: 15157555.2
(22) Anmeldetag: 04.03.2015
(51) Int. Cl.: G01B 21/16, B66F 9/075

(54) **Abstandsmessgerät**
Distance measurement device
Télémètre

(30) Priorität: 24.03.2014 DE 102014004141; 26.01.2015 DE 102015101090
(43) Veröffentlichungstag der Anmeldung: 30.09.2015
(73) Patentinhaber: STILL GmbH, 22113 Hamburg (DE)
(72) Erfinder: Hunt, Nicholas, 22529 Hamburg (DE); Hinkelthein, Felix, 25462 Rellingen (DE)
(74) Vertreter: Geirhos, Johann

(56) Entgegenhaltungen:
- WO-A1-2009/130528
- DE-A1- 10 016 309
- DE-A1-102006 012 205
- DE-U1-202012 004 038

## Beschreibung

Die Erfindung betrifft ein Abstandsmessgerät zur Höhenmessung eines Lastaufnahmemittels eines Fahrzeugs, insbesondere eines Flurförderzeugs, und ein Fahrzeug mit einem entsprechenden Abstandsmessgerät, wobei die Sensoreinheit über eine Kugelkopflagerung gegenüber dem Träger gelagert ist.

Flurförderzeuge, beispielsweise Gabelstapler oder Lagertechnikgeräte, umfassen ein an einem Hubgerüst anhebbar und absenkbar angeordnetes Lastaufnahmemittel, beispielsweise eine Lastgabel mit zwei Gabelzinken, mit der Lasten gehoben und transportiert werden können. Dabei kann es aus Gründen der Sicherheit gewünscht werden, bei gehobenen Lasten die maximale Fahrgeschwindigkeit zu begrenzen, da beispielsweise bei Kurvenfahrten mit hoch angehobenen Lasten, diese Lasten aufgrund der Fliehkraft von dem Lastaufnahmemittel fallen könnten oder das Flurförderzeug zum Kippen bringen könnten. Diese Gefahren nehmen bei größerer aufgenommener Last und größerer Hubhöhe zu. Um dieser Gefahr zu begegnen sind Sicherheitssysteme bekannt, die bei einer Kombination von großer angehobener Last und großer Hubhöhe der Last die Fahrgeschwindigkeit des Flurförderzeugs begrenzen und/oder zumindest eine entsprechende Warnung ausgeben. Bei dem Einsatz in einer Regalanlage ist es bei größeren Hubhöhen für den Fahrer zudem hilfreich, während des Positioniervorgangs die jeweils aktuelle Hubhöhe des Lastaufnahmemittels mit einer Anzeige eines Messsystems ablesen zu können.

Aus diesen Gründen besteht Bedarf an einem Höhenmesssystem, welches die Hubhöhe des Lastaufnahmemittels des Flurförderzeugs bestimmt. Entsprechend ist aus DE 197 31 687 A1 bereits ein Hubhöhenmesssystem bekannt, bei denen ein Sensor mittels eines Reibrades mit einem bewegbaren Teil des Hubmastes zusammenwirkt. Zudem sind bereits berührungslos arbeitende Hubhöhenmesssysteme bekannt, die auf der Grundlage von optischen Messverfahren, beispielsweise Laserstrahlen oder auf der Grundlage von akustischen Messprinzipien, wie Ultraschall arbeiten. Flurförderzeuge mit derartigen Hubhöhenmesssystemen sind beispielsweise aus der DE 10 2006 037 928 A1 und der DE 10 2008 020 170 A1 bekannt.

Flurförderzeuge werden häufig in staubigen und schmutzigen Umgebungen eingesetzt, wie in Gießereien, der Zementindustrie, der Düngemittelindustrie und Hafenanlagen. Gerade bei dem Transport von groben und nicht-palettierten Lasten können Teile der Last von dem Lastaufnahmemittel fallen. Zudem kann es im Betrieb des Flurförderzeugs unter engen Umgebungsbedingungen zu einem Kontakt bzw. einer Kollision des Flurförderzeugs mit der Umgebung kommen. Aus diesen Gründen ist es notwendig, das Hubhöhenmesssystem robust und solide auszuführen sowie geschützt gegen äußere mechanische Einflüsse, wie Stöße, zu bauen und am Flurförderzeug geschützt zu positionieren, um Beschädigungen des Hubhöhenesssystems bei Kontakt und Kollisionen des Flurförderzeugs mit der Umgebung zu vermeiden.

Bei der Verwendung von optischen Messsystemen als Hubhöhenmesssystem können diese durch Staub oder andere Verschmutzungen verdrecken und hierdurch ausfallen. Hieraus ergibt sich die Anforderung, dass das Messsystem vor schädlichen Einflüssen wie Verschmutzungen oder darauf fallenden Teilen geschützt wird und/oder einfach gereinigt werden kann.

Bei berührungslos arbeitenden Messsystemen ist zudem eine genaue und feine Ausrichtung der Messrichtung notwendig, insbesondere wenn das Messsystem eine Sensoreinheit umfasst, die einen Messstrahl, beispielsweise einen optischen Messstrahl, aufweist, der auf ein definiertes Ziel ausgerichtet werden muss.

Aus der DE 100 16 309 A1 ist ein in der Hand gehaltenes Entfernungsmessgerät mit einem in einer Kugel in einem Gehäuseteil gelagerten Lasersensor bekannt.

Durch die WO 2009/130528 A1 ist ein Hubfahrzeug mit einer Distanzmessvorrichtung bekannt, die auf eine Last auf der Hubvorrichtung gerichtet und drehbar gelagert ist.

Die DE 20 2012 004038 U1 offenbart einen Hochubgabelhubwagen, bei dem am oberen Ende des Hubmastes ein optischer Sensor angeordnet ist, der eine Last bzw. das Lastaufnahmemittel überwacht. Der optische Sensor ist dabei auf einer drehbaren Welle gelagert, um den gesamten Bereich überstreichen zu können.

Die DE 10 2006 012205 A1 offenbart eine Hubhöhen- und/oder Neigungsmessung durch eine Entfernungsmessung vom Lastaufnahmemittel zum Boden auf mindestens drei Punkte sowie Triangulation.

Der vorliegenden Erfindung liegt die Aufgabe zugrunde, bestehende Hubhöhenmesssysteme gemäß den beschriebenen Anforderungen zu verbessern.

Diese Aufgabe wird erfindungsgemäß durch ein Abstandsmessgerät, insbesondere zur Höhenmessung eines Lastaufnahmemittels eines Flurförderzeugs, gelöst, wobei das Abstandsmessgerät einen Träger umfasst, in welchem eine Sensoreinheit aufgenommen ist und bei dem die Sensoreinheit über eine Kugelkopflagerung gegenüber dem Träger gelagert ist. Dabei ist die Sensoreinheit in einem Sensorträger aufgenommen, der ein Kugelkopfelement aufweist, das in dem Träger gelagert ist. Die Sensoreinheit arbeitet bevorzugt optisch oder akustisch. Mit einer Kugelkopflagerung wird mit einem geringen Aufwand mechanischer Komponenten eine stufenlose und fein einstellbare Einstellbarkeit und Ausrichtbarkeit der Sensoreinheit um alle rotatorischen Freiheitsgrade und somit die Rotationsachsen der Kugelkopflagerung ermöglicht, um den Messstrahl und somit die Messrichtung der Sensoreinheit exakt auf einen Reflexionspunkt oder einen Messreflektor auszurichten. Zudem weist die Kugelkopflagerung einen robusten und einfachen Aufbau auf, der bei rauen Umgebungsbedingungen wenig störanfällig ist. Der Sensorträger kann mit der Sensoreinheit zusammen ausgerichtet werden und weitere Elemente wie schützende Gehäuseteile umfassen.

Es kann durch mindestens ein Stellelement, das den Sensorträger und den Träger verbindet, die Ausrichtung des Sensorträgers eingestellt werden. Durch ein solches Stellelement kann eine feinfühlige und genaue Einstellung erfolgen.

Es könne zwei Stellelemente in Bezug auf den Mittelpunkt des Kugelkopfelementes um einen Winkel versetzt angeordnet sein, insbesondere um 90°. Durch die zwei Haltepunkte der Stellelemente und den Mittelpunkt des Kugelkopfelements ist der Sensorträger gegenüber dem Träger in Bezug auf drei Punkte festgelegt und somit dessen Ausrichtung genau bestimmt, da keine freie Beweglichkeit verbleibt.

In einer günstigen Ausführungsform kann das Stellelement eine Schraube sein. Durch die Steigung des Gewindes, insbesondere im Falle der Verwendung von Feingewinden, kann eine sehr genaue und feinfühlige Einstellmöglichkeit der Ausrichtung erreicht werden. Dadurch sind auch kleinste Winkelveränderungen in der Ausrichtung einstellbar, die für die Ausrichtung beispielsweise eines Laserstrahls auf eine Entfernung von mehreren Metern durch einen Hubmast eines Flurförderzeugs erforderlich sind.

Vorteilhaft ist die Schraube mit einem Kugelkopf in dem Sensorträger gelagert, insbesondere in einem Gleitstein, der in dem Sensorträger verschiebbar angeordnet ist. Eine Schraube als Stellelement wird in dem Träger bevorzugt in einer Gewindebohrung geführt. Durch die verkippende Bewegung des Sensorträgers gegenüber dem Träger bei einem Einstellvorgang ergibt sich am Endpunkt der Schraube in dem Sensorträger sowohl eine Verschiebebewegung, wie auch ein Verkippen um einen Winkel. Dabei legt ein Stellelement den Träger sowohl auf eine Druck-, wie auch auf eine Zugbewegung fest. Es ist jedoch auch denkbar, dass ein Sensorträger beim Ausrichten nur durch zwei Schrauben eingestellt wird, gegen die dieser beispielsweise aufgrund der Schwerkraft anliegt.

Der Sensorträger kann ein Gehäuse umfassen, das die Sensoreinheit umschließt. Durch ein solches zusätzliches, die Sensoreinheit umfassendes Gehäuse, wird die Sensoreinheit besser gegenüber äußeren Einflüssen geschützt.

Das Gehäuse kann eine Öffnung für einen Signaldurchtrittsbereich der Sensoreinheit aufweisen.

In einer weiteren Ausgestaltung ist der Träger horizontal geteilt und weist ein Oberteil auf, das mit einem Unterteil verschraubt ist.

Durch eine solche Teilung wird eine leichte Montage des Kugelkopfelements ermöglicht.

Durch eine radial auf das Kugelkopfelement ausgerichtete Schraube kann das Kugelkopfelement in dem Träger festgeklemmt werden.

In einer weiteren bevorzugten Ausführungsform umfasst die Kugelkopflagerung ein zumindest bereichsweise kugeloberflächenförmig geformtes und mit der Sensoreinheit verbundenes Kugelkopfelement und am Träger ist ein, beispielsweise mit einer konkaven Form versehenes, Klemmstück befestigt, zur kraftschlüssigen Halterung des Kugelkopfelements relativ zu dem Träger. Alternativ und äquivalent kann das Kugelkopfelement mit dem Träger verbunden sein und das Klemmstück ist dann an der Sensoreinheit befestigt. Besonders vorteilhaft ist die erstgenannte Alternative, da bei ihr das zur Verspannung und zum Klemmen des Klemmstücks erforderliche Klemmmittel sich stets an der gleichen Stelle des Trägers bzw. des Gehäuses des Abstandsmessgeräts befinden.

Gemäß einer vorteilhaften Ausgestaltungsform der Erfindung ist das Klemmstück mittels eines Klemmmittels, insbesondere einer Klemmverschraubung, an dem Träger befestigt. Der Träger, das Klemmstück und das Klemmmittel bilden somit einen Klemmmechanismus zum kraftschlüssigen Verklemmen des Kugelkopfelements. Das Klemmmittel ist somit eingerichtet, das Kugelkopfelement über das Klemmstück gegen den Träger des Abstandsmessgeräts zu verspannen und kraftschlüssig zu verklemmen. Mit einem Klemmmittel, beispielsweise einer Klemmverschraubung kann der mit der Sensoreinheit versehene Träger nach dem Lösen des Klemmmittels auf einfache Weise stufenlos um alle Rotationsachsen und somit in alle Richtungen des Kugelkopfelements eingestellt werden und nach dem Einstellvorgang das Kugelkopfelement durch Anziehen des Klemmmittels mittels des Klemmstücks an dem Träger ortsfest und dauerhaft fixiert werden.

Bei einer weiteren bevorzugten Ausführungsform umfasst die Sensoreinheit ein gekapseltes Gehäuse mit einem Signaldurchtrittsbereich und der Signaldurchtrittsbereich ist von außen derart zugänglich, dass er bei dem montierten Abstandsmessgerät reinigbar ist, beispielsweise mit einem Tuch. Anders formuliert umfasst der Träger, der als Gehäuse dient, bevorzugt keine Abdeckung, die vor der Sensoreinheit sitzt und durch die das Messsignal geleitet wird. Bei diesem Konzept dient der Träger weiterhin als ein Gehäuse, das aufgrund seiner robusten Bauweise als mechanischer Schutz gegen größere Körper dient, die Schäden an der Sensoreinheit verursachen können, wie z.B. größere Steine, Lasten, die auf das Abstandsmessgerät fallen oder Stöße gegen sonstige Körper. Der Träger bewirkt aber keinen Schutz vor staubartigen Verschmutzungen. Eine hermetisch staubdichte Kapselung der Sensoreinheit durch ein als Träger ausgeführtes Gehäuse wäre mechanisch aufwendig, da eine Winkeleinstellbarkeit der Sensoreinheit gefordert ist.

Ferner umfasst die das Kugelkopfelement und die Sensoreinheit umfassende Baugruppe einen Anschlussbereich für ein Justageelement, wobei der Anschlussbereich bevorzugt eine Aufnahme mit einem nicht-runden Querschnitt umfasst. Bevorzugt ist der Querschnitt der Aufnahme sechseckförmig oder rechteckig oder kann bspw. auch quadratisch oder dreieckig sein. Durch entsprechende Formgestaltung des Anschlussbereichs wird es ermöglich, die Einstellung der Sensoreinheit um die Rotationsachsen mittels eines einfachen Justageelements als Werkzeug durchzuführen, beispielsweise einer Stange, bevorzugt einer Sechskantstange, eines Schraubenzieher oder eines Inbusschlüssels. Da jeder Monteur üblicherweise ein passendes und einfaches Werkzeug, beispielsweise einen Schraubenzieher, einen Inbusschlüssel oder eine Sechskantstange als Justageelement besitzt, ist es einfach und ohne zusätzlichen mechanischen Aufwand möglich, die Einstellung der Sensoreinheit stufenlos, fein dosierbar und exakt mit entsprechend hoher Einstellgenauigkeit unter Zuhilfenahme des in die Aufnahme eingesteckten Werkzeugs vorzunehmen.

Insbesondere kann das Kugelkopfelement den Anschlussbereich für das Justageelement umfassen. Hierdurch ist es möglich, die Axialerstreckung der genannten Aufnahme durch den Drehpunkt der Kugelkopfaufnahme zu führen, was die fein dosierbare Einstellbarkeit unter Zuhilfenahme des Justageelements vereinfacht.

Bevorzugt umgibt der Träger die Sensoreinheit von mehreren Seiten gehäuseförmig. Hierdurch kann ein Schutz der an dem Träger angeordneten Sensoreinheit vor äußeren mechanischen Einwirkungen erzielt werden. Dabei muss die Sensoreinheit nicht von allen Seiten umgeben sein, da bspw. eine Seite des Trägers an einer Struktur des unteren Teils des Hubgerüsts oder eines Fahrzeugkörpers des Flurförderzeugs anliegen kann, wodurch bereits der notwendige Schutz an dieser Seite realisiert wird. In der Richtung der Seiten, die nicht so geschützt sind, schützt der Träger gehäuseartig die Sensoreinheit vor größeren schädlichen Körpern und Stößen bzw. vor Kollisionen.

Weiter kann insbesondere die Sensoreinheit einen in Messrichtung ausgerichteten Signaldurchtrittsbereich aufweisen und der bevorzugt ebene Signaldurchtrittsbereich kann entweder bündig zu der benachbarten Kontur des Trägers liegen oder um einen Abstand in Richtung des Inneren des Abstandsmessgeräts versetzt sein. Der Signaldurchtrittsbereich ist bevorzugt eben. Bei einer bündigen Ausrichtung ist der Signaldurchtrittsbereich besonders einfach zu reinigen. Bei einer vertieft angeordneten Lage, wird der Sensor besser vor größeren Objekten, wie Steinen oder herabfallenden Gegenständen oder dergleichen geschützt. Dabei sollte er aber auch nicht zu tief liegen, da er dann schlecht erreicht werden kann, um ihn bspw. mit einem Tuch von staubartigen Verschmutzungen zu reinigen.

Insbesondere umfasst das Abstandsmessgerät bei einer vertikal nach oben gerichteten Ausrichtung der Messrichtung an den die Sensoreinheit umgebenden Seiten im unteren Bereich zumindest eine Öffnung größeren Querschnitts, als eine oder mehrere Öffnungen im oberen Bereich. Als Öffnungen werden Bereiche verstanden, durch welche Fremdkörper in das Innere des Abstandsmessgeräts geraten können oder aus ihm wieder herausfallen können. Die Öffnungen im oberen Bereich sind insbesondere Spalten zwischen der Sensoreinheit und dem benachbarten Träger bzw. Gehäuse. Es wurde erkannt, dass es nicht notwendig ist, zu verhindern, dass kleinere Objekte in das Abstandsmessgerät fallen können, sofern sichergestellt ist, dass sie durch die größere(n) unteren Öffnung(en) wieder hinausfallen können.

Weiter kann bevorzugt die Sensoreinheit eingerichtet sein, ein Messsignal auszusenden und einen Messaufnehmer umfassen, um Eigenschaften von dem an einem Objekt reflektierten Messsignals aufzunehmen und ein elektronisches Ergebnissignal bereitzustellen, welches ein Maß für den Abstand des Gegenstands von der Sensoreinheit ist. Die genannten Eigenschaften des reflektierten Messsignals können Signallaufzeiten sein oder eine Strahlablenkung, wie dies bspw. bei dem Triangulationsmessprinzip zum Einsatz kommt. Da die Sensoreinheit also den genannten Sender und einen Empfänger aufweist, wird an dem vertikal verfahrbaren oberen Teil des Hubgerüsts kein elektronisches Bauteil benötigt. Es ergibt sich eine deutliche Reduzierung der mechanischen Bauelemente in Vergleich zu vorbekannten Ausführungsformen mit einem Messseil, welches auf einer Trommel aufgerollt werden musste.

Ein industrielles Fahrzeug, insbesondere ein Flurförderzeug, umfasst ein am Fahrzeug befestigtes Hubgerüst, wobei ein Lastaufnahmemittel mittels des Hubgerüsts heb- und senkbar ist und ein erfindungsgemäßes Abstandsmessgerät eingerichtet ist, den Abstand zwischen dem Lastaufnahmemittel und einem nicht heb- oder senkbaren Bereich des Hubgerüstes oder einem Fahrzeugkörper des Flurförderzeugs zu messen. Das Heben und Senken geschieht insbesondere im Wesentlichen in der vertikalen Richtung. Dabei kann ein beweglicher Referenzpunkt für die Distanzmessung, wie bspw. ein Messreflektor, am Lastaufnahmemittel oder an einem ortsfest damit verbundenen Teil des Hubgerüsts vorgesehen sein. Mit der erfindungsgemäßen Kugelkopflagerung der Sensoreinheit und dem gehäuseartigen, die Sensoreinheit vor äußeren mechanischen Einwirkungen schützenden Träger kann bei einem Flurförderzeug mit geringem Bauaufwand eine stufenlose und fein justierbare Einstellung der Sensoreinheit erzielt werden und die innerhalb des gehäuseartigen Trägers angeordnete Sensoreinheit vor äußeren mechanischen Einwirkungen und möglichen Beschädigungen geschützt werden.

Darüber hinaus kann bevorzugt eine Schwenkbarkeit von der Sensoreinheit relativ zu dem Träger um alle rotatorischen Freiheitsgrade und somit in alle Richtungen der Kugelkopflagerung von mindestens +/- 3° und bevorzugt mindestens +/-5° ermöglicht werden. Aufgrund dieser Winkelbereiche der Einstellbarkeit und großen Einstellbereichen kann auch bei Hubgerüsten, die einen gewissen Verzug aufweisen, oder bei entsprechend hohen Fertigungstoleranzen die Messrichtung in exakte Ausrichtung zu dem Messreflektor gebracht werden. Mit einer Kugelkopflagerung ist ein derartiger großer Einstellbereich in allen Richtungen mit geringem Bauaufwand erzielbar.

Es besteht bevorzugt keine Einstellbarkeit der absoluten (kartesischen) Lage der Sensoreinheit relativ zu dem Außengehäuse, da eine Messung im Millimeterbereich nicht notwendig ist und größere mechanische Ungenauigkeiten nicht zu erwarten sind.

Weitere Vorteile und Einzelheiten der Erfindung werden anhand des in den schematischen Figuren dargestellten Ausführungsbeispiels näher erläutert. Hierbei zeigt:
- Figur 1: eine schematische Ansicht eines Flurförderzeugs in der Seitenansicht,
- Figur 2: einen Querschnitt mittig durch ein in Figur 3 gezeigtes erfindungsgemäßes Abstandsmessgerät,
- Figur 3: das erfindungsgemäße Abstandsmessgerät in einer Explosionsansicht,
- Figur 4: in einer Sprengbilddarstellung eine weitere Ausführungsform eines erfindungsgemäßen Abstandsmessgeräts,
- Figur 5: perspektivisch die Ausführungsform der Figur 4 montiert,
- Figur 6: eine weitere Sprengbilddarstellung der Ausführungsform der Figur 4,
- Figur 7: schematisch in einer Schnittebene durch das Kugelkopfelement das Funktionsprinzip der Ausführungsform der Figur 4 und
- Figur 8: schematisch in einer senkrecht zur Schnittebene der Figur 7 angeordneten Schnittebene das Funktionsprinzip.

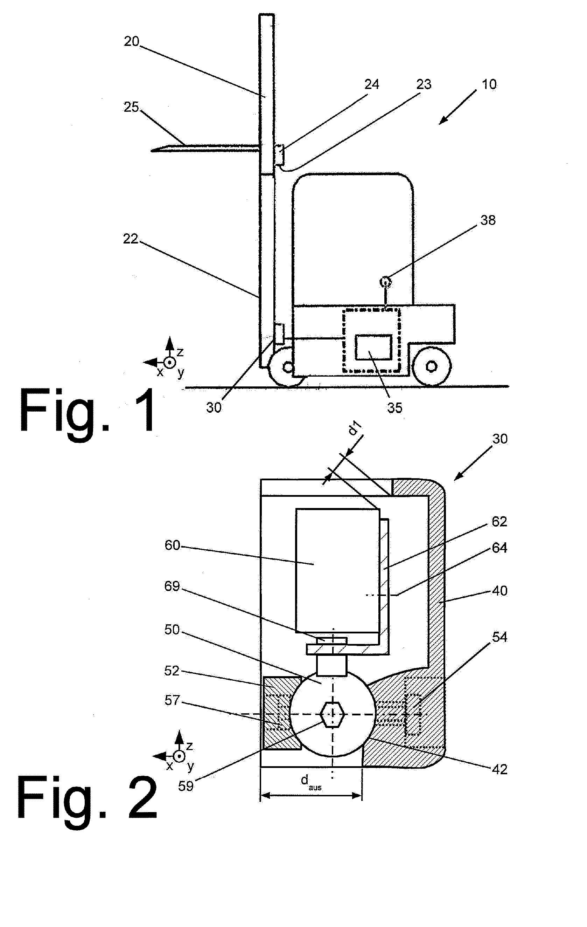

Fig. 1 zeigt ein Flurförderzeug 10 in der Seitenansicht. Dieses umfasst einen Fahrerarbeitsplatz, der beispielsweise von einem Fahrerschutzdach oder einer Fahrerkabine gebildet ist, und einen Fahrzeugkörper mit bevorzugt drei oder vier Rädern. An der Front des Fahrzeugkörpers ist ein Hubgerüst 20, 22 angeordnet. Das Hubgerüst 20, 22 kann an dem Fahrzeugkörper starr und somit nicht neigbar angeordnet sein oder alternativ in der x-z-Ebene um eine im Wesentlichen horizontale und in Fahrzeugquerrichtung verlaufende Neigeachse am Fahrzeugkörper des Flurförderzeugs 10 neigbar angeordnet sein. Das Hubgerüst 20, 22 ist in der gezeigten Ausführungsform zweigeteilt mit einem oberen verschiebbaren Teil 20, der über eine Führung (nicht dargestellt) gegen einen unteren Teil 22 vertikal verschiebbar ist. Hierfür wird ein nicht gezeigter Hubantrieb verwendet. Auch einteilige Hubgerüste oder andere mehrteilige Hubgerüste sind verwendbar, bei denen drei, vier oder mehr einzelne Teile relativ zueinander teleskopierbar sind. An dem jeweils obersten Teil des Hubgerüsts 20, 22 ist ein Lastaufnahmemittel 24 anhebbar und absenkbar angeordnet, beispielsweise ein Gabelträger mit einer von zwei Gabelzinken gebildeten Lastgabel 25.

An dem unteren Teil des Hubgerüsts 22 bzw. am Fahrzeugkörper ist ein Abstandsmessgerät 30 befestigt. Die Messrichtung des Abstandsmessgeräts 20 zeigt bei senkrecht stehendem Hubgerüst 20, 22 vertikal nach oben. Das Abstandsmessgerät 30 ist so ausgerichtet, dass dessen emittiertes Messsignal auf einen Messreflektor 23 gerichtet ist, der an dem anhebbaren und absenkbaren Lastaufnahmemittel 24 angeordnet ist. Alternativ kann der Messreflektor 23 auch an dem oberen Teil 20 des Hubgerüsts angeordnet sein. Das Messsignal wird am Messreflektor 23 reflektiert. Bei optischen Messprinzipien wird eine diffuse Reflexion bevorzugt. Es kann alternativ auch bspw. ein Spiegel für eine gerichtete Reflexion verwendet werden. In letzterem Fall ist es wichtig, dass das Abstandsmessgerät 30 exakt zu dem Spiegel ausgerichtet ist. Das reflektierte Signal wird von dem Abstandsmessgerät 30 detektiert, um hierüber die jeweilige Hubhöhe des Lastaufnahmemittels 24 zu bestimmen.

Ein von dem Abstandsmessgerät 30 erzeugtes elektronisches Signal wird an eine elektronische Steuerung 35 weitergeleitet. Der Steuerung 35 können weitere Messdaten zugeleitet werden, wie beispielsweise ein Signal, welches ein Maß für das Gewicht der mit dem Lastaufnahmemittel 24 aufgenommenen Last ist. Bei einer Überschreitung eines maximal zulässigen Gewichts bei einer entsprechenden Höhe des Hubgerüsts 20 erzeugt die Steuerung ein Warnsignal. Dieses Warnsignal kann als ein opto-/akustisches Signal an einem Signalgeber 38 ausgegeben werden oder direkt mit der Motorensteuerung des Flurförderzeugs 10 verbunden sein, um die maximal mögliche Fahrgeschwindigkeit des Flurförderzeugs 10 zu drosseln. Zusätzlich oder alternativ kann mit der Steuerung 35 eine Anzeigeeinrichtung in Wirkverbindung stehen, an der die aktuell mit dem Abstandsmessgerät 30 gemessene Hubhöhe des Lastaufnahmemittels 24 angezeigt wird, um dem Fahrer das Positionieren des Lastaufnahmemittels 24 zu erleichtern.

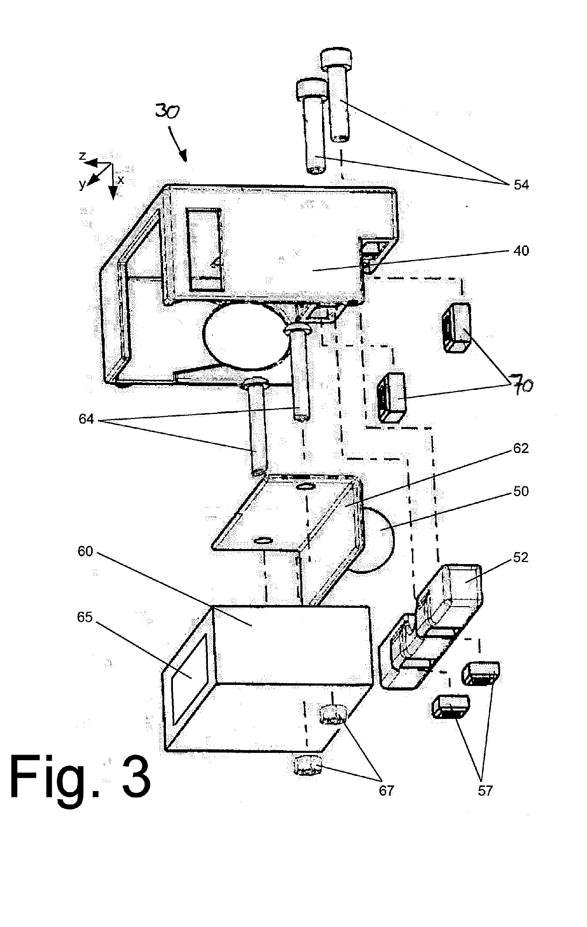

Gemäß Fig. 2 und Fig. 3 umfasst das erfindungsgemäße Abstandsmessgerät 30 einen Träger 40, der bevorzugt als ein Kunststoffbauteil aus einem schlagzähen oder schlagfesten Kunststoff, bevorzugt faserverstärkt, der allgemeinen Wandstärke von mindestens 2 mm, bevorzugt mindestens 3 mm hergestellt ist. Der Träger 40 nimmt gehäuseartig die Sensoreinheit 60 auf. Eine Flanke eines Sensorträgers 62 ist über zwei Schrauben 64 und mit entsprechenden Muttern 67 an einer Längsseite der Sensoreinheit 60 befestigt. Der Sensorträger 62 ist winkelförmig und an dessen anderen Flanke ist ein Kugelkopfelement 50 einer Kugelkopflagerung angeordnet, beispielsweise mit einer Schaube 69 dauerhaft befestigt.

Erfindungsgemäß ist die Sensoreinheit 60 über die Kugelkopflagerung an dem Träger 40 einstellbar gelagert. Die Kugelkopflagerung besteht aus dem Kugelkopfelement 50, das mittels eines Klemmstücks 52 mit dem Träger 40 kraftschlüssig verklemmbar ist. Das Kugelkopfelement 52 ist zwischen dem Klemmstück 42 und dem Träger 40 angeordnet und somit zwischen Klemmstück 52 und Träger 40 arretierbar.

Aus Fig. 2 ist ersichtlich, dass das Kugelkopfelement 50 über das Klemmstück 52 gegen einen Bereich 42 des Trägers 40 verklemmbar ist. Dazu umfassen das Klemmstück 52 und der genannte Bereich 42 jeweils eine konkave Form, die an den Durchmesser des Kugelkopfelements 50 angepasst ist.

Das Kugelkopfelement 50 ist mit einem Anschlussbereich 59 für ein Justageelement versehen. Im dargestellten Ausführungsbeispiel ist der Anschlussbereich 59 von einer Sechskantausnehmung innerhalb des Kugelkopfelements 50 gebildet, in die eine Sechskantstange als Justageelement eingesteckt werden kann.

Das Klemmstück 52 ist mittels eines Klemmmittels 54, 57 an dem Träger 40 verklemmbar. Das Klemmmittel 54, 57 ist im dargestellten Ausführungsbeispiel als Klemmverschraubung mit mehreren Klemmschrauben 54 gebildet, die im Träger 40 aufgenommen sind, und mit Mutten 57, die in dem Klemmstück 52 aufgenommen sind, verschraubbar sind.

Fig. 3 zeigt zwei Muttern 70, die in Aufnahmen des Trägers 40 eingeführt werden können. Im Anschluss können von unten Schrauben durch eine passende Haltestruktur, wie bspw. ein Rahmenelement eines unteren Teils des Hubgerüsts 22 oder ein Element des Fahrzeugkörpers des Flurförderzeugs 10 gesteckt und mit den Muttern 70 verschraubt werden, um so das Abstandsmessgerät 30 mit dem unteren Teil 22 des Hubgerüsts oder dem Fahrzeugkörper des Flurförderzeugs 10 fest zu verbinden.

Mit der erfindungsgemäßen Kugelkopflagerung kann die Sensoreinheit 60 relativ zu dem Träger 40 um alle rotatorischen Freiheitsgrade des Kugelkopfelements 50 und somit um drei voneinander unabhängigen Rotationsachsen geschwenkt werden. Die Schwenkbarkeit um die x- und die y-Achse (siehe Fig.2) wird benötigt, um die Messrichtung auf den Messreflektor 23 auszurichten. Die Schwenkbarkeit um die z-Achse wird nicht notwendigerweise benötigt, aber sie ergibt sich automatisch durch die beschriebene Kugelkopflagerung. Die Einstellbarkeit in alle Richtungen wird benötigt, um die Messrichtung auf den Messreflektor 23 auszurichten und ist notwendig, da aufgrund der Produktionstoleranz der einzelnen Teile während des Herstellprozesses nicht sichergestellt werden kann, dass die Sensoreinheit 60 hinreichend exakt zu dem Messreflektor 23 ausgerichtet ist. Eine Einstellgenauigkeit von 0,5° um die jeweiligen Rotationsachsen ist notwendig und mit der erfindungsgemäßen Kugelkopflagerung des Trägers 40 auf einfache Weise erzielbar.

Ferner wird das Flurförderzeug 10 bestimmungsgemäß auch bei rauen Umgebungsbedingungen eingesetzt, so dass das Hubgerüst 20, 22 Stößen oder Schlägen ausgesetzt sein kann. Zudem wird das Flurförderzeug 10 bestimmungsgemäß in engen Gängen oder Fluren eingesetzt, wo es regelmäßig zu einem Anstoßen oder kleineren Anfahrunfällen mit Strukturen (z.B. Hochregallager, Wände und dergleichen) kommen kann. Bei dem Anheben von Lasten kann es zudem zu einem Verbiegen und/oder Schwingen des Hubgerüstes 20, 22 kommen. All diese Umgebungsbedingungen bewirken, dass am Hubgerüst 20, 22 während des Einsatzes ein Verzug auftreten kann. Aufgrund dieses Verzugs kann die notwendige exakte Ausrichtung von der Sensoreinheit 60 und dem Messreflektor 23 nicht mehr gegeben sein, so dass eine Korrektur der Messrichtung der Sensoreinheit 60 vorgenommen werden muss.

Zur stufenlosen Einstellung der Winkelausrichtung des Abstandsmessgeräts 30 werden zunächst die beiden Klemmschrauben 54 des Klemmstücks 52 etwas gelöst, so dass die Verspannung von dem Klemmstück 52 auf das Kugelkopfelement 50 gelöst wird. Nachfolgend wird das Justageelement, beispielsweise ein Sechskantschlüssel oder eine Sechskantstange als Werkzeug, in den Anschlussbereich 59 des Kugelkopfelements 50 gesteckt. Auf der Höhe des Anschlussbereichs 59 hat der Träger 40 einen Durchbruch, so dass der Monteur das Kugelkopfelement 50 einfach ausrichten kann. Dazu aktiviert er die Messsignalquelle, insbesondere einen Laserstrahl und verändert die Ausrichtung so lange, bis das reflektierte Messsignal im Detektor der Sensoreinheit 60 empfangen wird. Je länger das Justageelement ist, desto genauer, exakter und feiner lässt sich die Ausrichtung der Sensoreinheit 60 einstellen. Nach erfolgter Ausrichtung werden die beiden Klemmschrauben 54 wieder angezogen, so dass die gewünschte Ausrichtung durch eine kraftschlüssige Verklemmung des Kugelkopfelements 52 zwischen dem Träger 40 und dem Klemmstück 52 dauerhaft fixiert wird.

Durch das Justageelement, beispielsweise eine einfache Sechskantstange, ergibt sich eine einfache Handhabung des Einstellvorgangs mit handelsüblichen Mitteln und Werkzeugen.

Bei dem erfindungsgemäßen Abstandsmessgerät 30 ist für die Justage der Sensoreinheit 60 nur eine Zugänglichkeit von zwei Seiten auf die Klemmschrauben 54 und den Anschlussbereich 59 erforderlich.

Die erfindungsgemäße Kugelkopflagerung ermöglicht zudem eine kompakte und bauraumsparende Bauweise des Abstandsmessgerätes 30, so dass das erfindungsgemäße Abstandsmessgerät 30 in räumlich beengten Einbauräumen eingesetzt werden kann.

Das Kugelkopfelement 50 hat in den Klemmbereichen mit der konkaven Form 42 und dem Klemmstück 52 bevorzugt eine glatte polierte Oberfläche und ist aus einem harten Kunststoff gefertigt, wie beispielsweise aus einem Duroplasten. Das Klemmstück 52 ist ebenfalls aus Kunststoff hergestellt, wie beispielsweise aus einem schlagzähen oder schlagfesten Kunststoff. Aufgrund der glatten Oberflächen ist ein winkelgenaues stufenloses Einstellen der Sensoreinheit 60 möglich. Die Ausführung des Kugelkopfelements 52 und der zum Verklemmen vorgesehen Bauteile aus Kunststoff verhindert auf einfache Weise ein Festfressen der Kugelkopfklemmung.

In Verbindung mit dem als Kunststoffbauteil ausgebildeten Träger 40 ist durch die gewählten Materialien das erfindungsgemäße Abstandsmessgerät 30 nicht anfällig gegen Rost oder sonstige korrosive Einflüsse. Das erfindungsgemäße Anstandsmessgerät 30 kann somit auch im Außenbereich und/oder in aggressiven bzw. salzhaltiger Umgebung eingesetzt werden.

Aus einleitend genannten Gründen muss die empfindliche Sensoreinheit 60 gut vor mechanischen Einwirkungen geschützt werden. Deshalb hat der bevorzugt aus schlagfestem Kunststoff gebildete Träger 40 die bereits genannte hohe Materialdicke, um eine hohe Widerstandsfähigkeit gegen mechanische Einwirkungen von Außen zu erzielen und einen robusten Schutz der innerhalb des gehäuseartigen Trägers 40 angeordneten Sensoreinheit 60 zu erzielen. Von einer Grundplatte ausgehend, die in Fig. 2 rechtseitig dargestellt ist, erstrecken sich Wände zu drei Seiten, wobei an der Seite, die beim Einbau unten liegt, keine Wände des Trägers 40 vorgesehen sind. Die Wand, die oben liegend ist, umfasst einen großen Durchbruch, um ausreichend Platz für den Strahlengang der Sensoreinheit 60 frei zu lassen. Der Signaldurchtrittsbereich 65 ist der messstrahldurchlässige Bereich der hermetisch geschlossenen Sensoreinheit 60. So gesehen sind die Sensoreinheit 60 und auch ihr Signaldurchtrittsbereich 65 von der Oberseite des Abstandsmessgeräts 30 offen von außen zugänglich. Dies ist sinnvoll, da das Flurförderzeug 10 häufig in sehr staubigen Umgebungen zum Einsatz kommt. Zum Schutz vor großen groben Beeinflussungen, wie z.B. kleineren Steinen, ist der Signaldurchtrittsbereich 65 um einen Abstand d1 in Richtung des Geräteinneren versetzt. Wenn derartige Störstoffe auf dem Signaldurchtrittsbereich liegen bleiben, so können sie leicht vom Fahrer des Flurförderzeugs entfernt werden.

Aufgrund der Bauweise des Abstandsmessgeräts 30 mit einem offenen Gehäuse, können kleinere Störstoffe, wie Getreidesamen oder sonstige Schüttgutpartikel, die kleiner sind als das Maß d1 (siehe Fig.2) in das Innere des Abstandsmessgeräts 30 fallen. Das Maß d1 ist der jeweils größte Abstand von der Oberkante der Sensoreinheit 60 zu dem Durchbruch in der entsprechenden Wand des Trägers 40. Da das Abstandsmessgerät 30 nach unten offen ist, ergibt sich ein offener Bereich der Breite dₐᵤₛ, über den diese Partikel wieder aus dem Abstandsmessgerät 30 herausfallen können. So ist zwar der von der erfindungsgemäßen Kugelkopfklemmung gebildete Winkeleinstellmechanismus der Sensoreinheit 60 den Umgebungsbedingungen ausgesetzt, aber aufgrund der massiven und wenig störanfälligen Bauweise können die genannten Störstoffe keinen Schaden verursachen.

Zusammengefasst bietet das Abstandsmessgerät 30 für schädliche Körper abhängig von ihrer Größe auf drei verschiedene Arten einen Schutz. Große Körper werden von der soliden Struktur des Trägers 40 des Abstandsmessgeräts 30 von der Sensoreinheit 60 ferngehalten. Kleinere Körper, wie z.B. Getreide, Steine oder Düngerkörner können auf die Sensoreinheit 60 mit deren Signaldurchtrittsbereich fallen. Dort verursachen sie aber keinen Schaden, da sie unmittelbar weiter nach unten in das Innere des Abstandsmessgeräts 30 fallen und von dort nach unten ausgeleitet werden. Noch kleinere Körper wie Staub, Ruß oder ähnliches können sich auf dem Signaldurchtrittsbereich 65 ansammeln. Da dieser aber von außen gut erreichbar ist, ist es für den Fahrer des Flurförderzeugs 10 einfach möglich, den Signaldurchtrittsbereich 65 zu reinigen, falls eine Störung auftritt.

Als Messprinzip für die Sensoreinheit 60 eignet sich die Verwendung eines Laserdistanzsensors. Hierbei wird die Phasenverschiebung von einem ausgesendeten Laserstrahl zu dem reflektierten und von der Sensoreinheit 60 detektierten Strahl analysiert und über die Laufzeit des Lichts wird die Entfernung von dem Reflektor 23 zu dem Abstandsmessgerät 30 bestimmt. Alternativ kann das bekannte Prinzip der Lasertriangulation verwendet werden. Dabei wird ein Laserstrahl auf den Messreflektor 23 gelenkt. Der zurückgeworfene Strahl fällt auf eine Zeilenkamera, die in einem gewissen Winkel zu dem Laser steht und aufgrund der von der Zeilenkamera gemessenen Lage des Reflektorpunkts kann die Höhe des Lastaufnahmemittels 24 bestimmt werden. Daneben eignen sich auch akustische Messverfahren, welche bevorzugt mit Ultraschall arbeiten.

Der Messreflektor 23 muss kein kleiner eng umgrenzter Punkt sein, sondern hierfür kann auch eine Fläche wie z.B. 5x5 cm oder 10x10cm genutzt werden. Dennoch ist eine exakte Justierung des Messstrahls auf bevorzugt die Mitte dieser Fläche notwendig, da es aufgrund dynamischer Schwingungsbelastungen und aufgrund von Gewichtsbelastungen zu elastischen Verformungen des Hubgerüsts 22 kommen kann, was auch die Lage des Messstrahls auf dem Reflektorpunkt bzw. -bereich verändert.

Die relative Ortsangaben "innen" und "außen" beziehen sich stets auf den Mittelpunkt des Abstandsmessgeräts. Die Ausrichtung "oben" und "unten" bezieht sich auf die bestimmungsgemäße Ausrichtung des Abstandsmessgeräts 30 derart, dass dabei die Messrichtung nach oben zeigt.

Die Erfindung ist nicht auf die Verwendung als Hubhöhenmesssystem beschränkt. Bei einem Flurförderzeug 10 mit einem neigbaren Hubgerüst 20, 22 kann ebenfalls das erfindungsgemäßen Abstandsmessgerät als Neigungsmesssystem des Hubgerüstes 20, 22 ausgebildet werden.

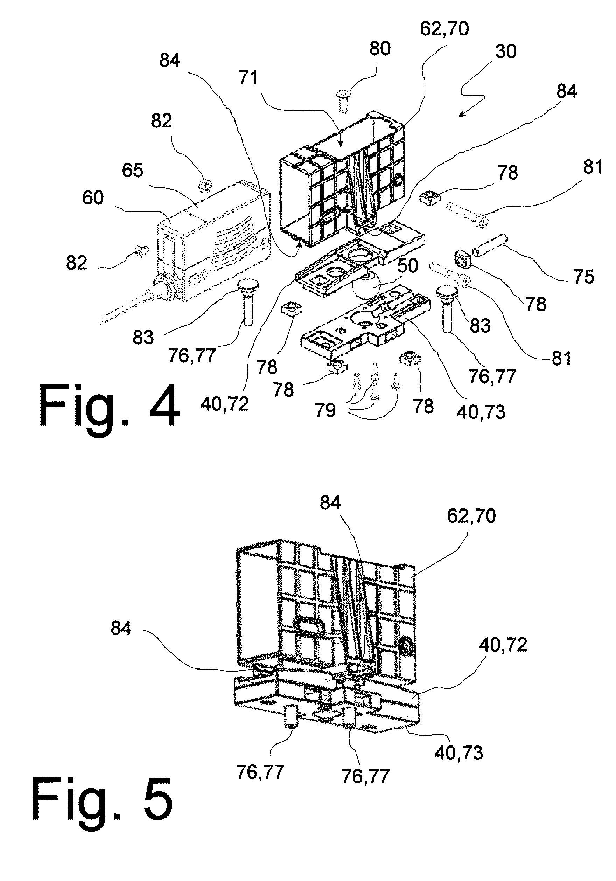

Die Figur 4 zeigt in einer Sprengbilddarstellung eine weitere Ausführungsform eines erfindungsgemäßen Abstandsmessgeräts 30. Bauelemente, die denjenigen der bisher beschriebenen Ausführungsform entsprechen, sind mit denselben Bezugszeichen versehen. Ein Kugelkopfelement 50 ist über eine Schraube 80 mit einem Sensorträger 62 verbunden, der als Gehäuse 70 ausgebildet ist mit einer Öffnung 71, durch die ein Messstrahl aus einem Signaldurchtrittsbereich 65 einer Sensoreinheit 60 gelangen kann, die in das Gehäuse 71 eingesetzt werden kann. Über Schrauben 81 und Muttern 82 kann die Sensoreinheit 60 in dem Gehäuse sich befestigt werden.

Das Kugelkopfelement 50 wird von einem Träger 40 gehalten, der aus einem Oberteil 72 und einem Unterteil 73 gebildet ist, die jeweils kugelschalenförmige Elemente 74 aufweisen, durch die das Kugelkopfelement 50 gehalten wird. Der Träger 40 ist durch die Ausbildung mit einem Oberteil 72 und einem Unterteil 73 horizontal geteilt. Durch eine radial auf das Kugelkopfelement 50 ausgerichtete Schraube 75 kann das Kugelkopfelement 50 in dem Träger 40 festgeklemmt und arretiert werden in einer bestimmten Stellung.

In der Darstellung der Figur 4 sind noch zwei Stellelemente 76 in Form von Schrauben 77 dargestellt, die in Vierkantmuttern 78 geführt werden. Die Vierkantmuttern 78 sind in entsprechende Aussparungen des Trägers 40 eingesetzt. Ebenso werde durch die Vierkantmuttern 78 die Schraube 75 geführt sowie Befestigungsschrauben 79 für das gesamte Abstandsmessgerät 30 gegenüber dem Flurförderzeug verschraubt. Die Schrauben 77 sind mit ihrem oberen Ende, an dem sich ein Kugelkopf befindet, in einem Gleitstein 83 eingesetzt, der in dem Sensorträger 62 in einer Führung 84 verschiebbar angeordnet ist.

Die Figur 5 zeigt perspektivisch die Ausführungsform der Figur 4 in montiertem Zustand. Der als Gehäuse 70 ausgebildete Sensorträger 62 ist an dem aus dem Oberteil 72 und im Unterteil 73 gebildeten Träger 40 befestigt. Durch die zwei Schrauben 77 als Stellelemente 76, die von der Unterseite zugänglich sind und in der hier vorliegenden Bauform ohne Schraubenkopf mit einem Innensechskant gedreht werden können, kann die relative Stellung des Sensorträgers 62 gegenüber dem Träger 40 ausgerichtet werden. Das obere Ende der Schrauben 77 ist dabei jeweils über den Gleitstein in den Führungen 84 verschiebbar an dem Sensorträger 62 gelagert.

Dabei sind die beiden Stellelemente 76 bezogen auf den Mittelpunkt des Kugelkopfelements 50 in einem Winkel voneinander zu 90° angeordnet. Dadurch kann eine Ausrichtung in jede Raumrichtung durch die Lagerung des Kugelkopfelements 50, wie bereits bei dem vorherigen Ausführungsbeispiel beschrieben, erfolgen. Jedoch kann die Einstellung sehr feinfühlig und genau erfolgen, da durch die Gewindesteigung sehr kleine und präzise Bewegungen des Sensorträgers 62 mit dem Kugelkopfelement 50 gegenüber dem Träger 40 möglich sind.

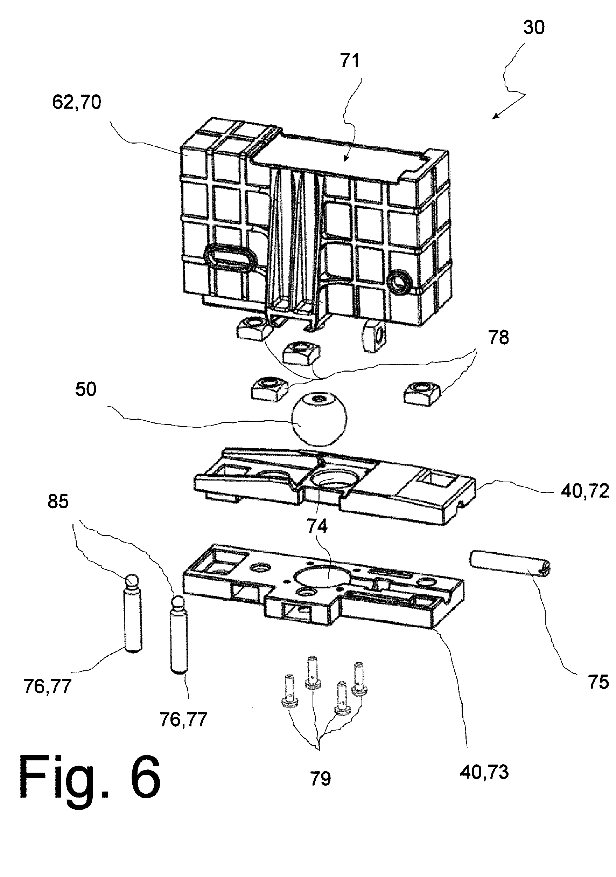

Die Figur 6 zeigt eine weitere Sprengbilddarstellung der Ausführungsform des Abstandsmessgeräts 30 der Figur 4. Das Kugelkopfelement 50 ist mit dem als Gehäuse 70 ausgebildeten Sensorträger 62 verbunden. Durch die Öffnung 71 kann ein Messstrahl einer Sensoreinheit gelangen, die in das Gehäuse 71 eingesetzt werden kann. Das Kugelkopfelement 50 wird von dem Träger 40 gehalten, der aus dem Oberteil 72 und dem Unterteil 73 gebildet ist, die jeweils kugelschalenförmige Elemente 74 aufweisen, durch die das Kugelkopfelement 50 gehalten wird. Der Träger 40 ist durch die Ausbildung mit einem Oberteil 72 und einem Unterteil 73 horizontal geteilt. Durch die radial auf das Kugelkopfelement 50 ausgerichtete Schraube 75 kann das Kugelkopfelement 50 in dem Träger 40 festgeklemmt und arretiert werden in einer bestimmten Stellung.

Durch die zwei Stellelemente 76 als Schrauben 77 dargestellt, die in den Vierkantmuttern 78 geführt werden kann die Einstellung erfolgen. Dabei sind in der Darstellung der Figur 6 Kugelköpfe 85 am oberen Ende der Schrauben 77 zu erkennen, da die zugehörigen Gleitsteine nicht dargestellt sind. Über die Befestigungsschrauben 79 ist das gesamte Abstandsmessgerät 30 gegenüber dem Flurförderzeug verschraubt.

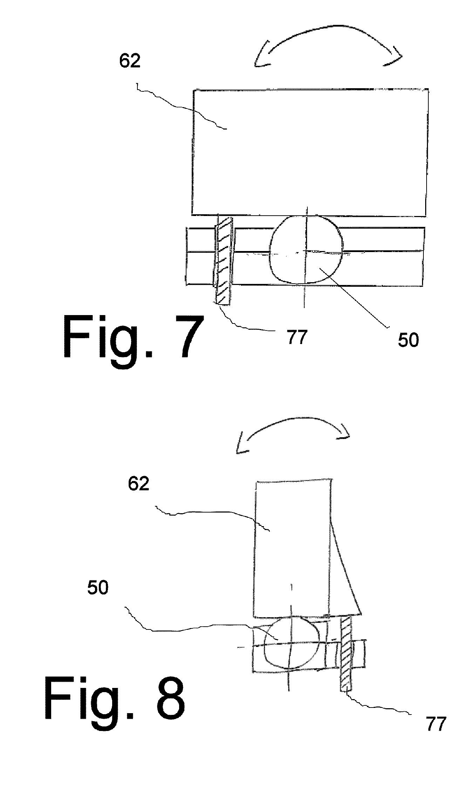

Die Figur 7 zeigt schematisch in einer Schnittebene durch das Kugelkopfelement 50 das Funktionsprinzip der Ausführungsform der Figur 4. Gegenüber dem Träger 40 kann durch die Schraube 77 der Sensorträger 62, wie durch den Pfeil dargestellt, verschwenkt werden.

Die Figur 8 zeigt schematisch in einer senkrecht zur Schnittebene der Figur 7 angeordneten Schnittebene das Funktionsprinzip. Auch in dieser Richtung, 90° zu der ersten Richtung, kann der Sensorträger 62 um den Kugelkopf 50 durch die Schraube 77 verschwenkt werden. Dadurch ergibt sich eine Einstellbarkeit wie bei einer Drehung um zwei rechtwinklig zueinander angeordnete Achsen.

## Patentansprüche

1. Abstandsmessgerät (30), insbesondere zur Höhenmessung eines Lastaufnahmemittels (24) eines Flurförderzeugs (10), wobei das Abstandsmessgerät (30) einen Träger (40) umfasst, in welchem eine Sensoreinheit (60) aufgenommen ist, wobei die Sensoreinheit (60) über eine Kugelkopflagerung (52, 50, 42) gegenüber dem Träger (40) gelagert ist
**dadurch gekennzeichnet,**
**dass** die Sensoreinheit (60) in einem Sensorträger (62) aufgenommen ist, der ein Kugelkopfelement (50) aufweist, das in dem Träger (40) gelagert ist.

2. Abstandsmessgerät nach Anspruch 1,
**dadurch gekennzeichnet,**
**dass** durch mindestens ein Stellelement (76), das den Sensorträger (62) und den Träger (40) verbindet, die Ausrichtung des Sensorträgers (62) eingestellt werden kann.

3. Abstandsmessgerät nach Anspruch 2,
**dadurch gekennzeichnet,**
**dass** zwei Stellelemente(76) in Bezug auf den Mittelpunkt des Kugelkopfelementes (50) um einen Winkel versetzt angeordnet sind, insbesondere um 90°.

4. Abstandsmessgerät nach Anspruch 2 oder 3,
**dadurch gekennzeichnet,**
**dass** das Stellelement (76) eine Schraube (77) ist.

5. Abstandsmessgerät nach Anspruch 4,
**dadurch gekennzeichnet,**
**dass** die Schraube (77) mit einem Kugelkopf (85) in dem Sensorträger (62) gelagert ist, insbesondere in einem Gleitstein (83), der in dem Sensorträger (62) verschiebbar angeordnet ist.

6. Abstandsmessgerät nach einem der Ansprüche 1 bis 5,
**dadurch gekennzeichnet,**
**dass** der Sensorträger (62) ein Gehäuse (70) umfasst, das die Sensoreinheit (60) umschließt.

7. Abstandsmessgerät nach Anspruch 6,
**dadurch gekennzeichnet,**
**dass** das Gehäuse (70) eine Öffnung (71) für einen Signaldurchtrittsbereich (65) der Sensoreinheit (60) aufweist.

8. Abstandsmessgerät nach einem der Ansprüche 1 bis 7,
**dadurch gekennzeichnet,**
**dass** der Träger (40) horizontal geteilt ist und ein Oberteil (72) aufweist, das mit einem Unterteil (73) verschraubt ist.

9. Abstandsmessgerät nach einem der Ansprüche 1 bis 8,
**dadurch gekennzeichnet,**
**dass** durch eine radial auf das Kugelkopfelement (50) ausgerichtete Schraube (75) das Kugelkopfelement (50) in dem Träger (40) festgeklemmt werden kann.

10. Abstandsmessgerät nach Anspruch 1,
**dadurch gekennzeichnet,**
**dass** die Kugelkopflagerung (52, 50, 42) ein zumindest bereichsweise kugeloberflächenförmiges und mit der Sensoreinheit (60) verbundenes Kugelkopfelement (50) umfasst und am Träger (40) ein Klemmstück (52) befestigt ist, zur kraftschlüssigen Halterung des Kugelkopfelements (50) relativ zu dem Träger (40).

11. Abstandsmessgerät nach Anspruch 10,
**dadurch gekennzeichnet,**
**dass** das Klemmstück (52) mittels eines Klemmmittels (54, 57), insbesondere einer Klemmverschraubung, an dem Träger (40) befestigt ist.

12. Abstandsmessgerät nach einem der vorangegangenen Ansprüche,
**dadurch gekennzeichnet,**
**dass** die Sensoreinheit (60) ein gekapseltes Gehäuse mit einem Signaldurchtrittsbereich (65) umfasst und dass der Signaldurchtrittsbereich (65) von außen derart zugänglich ist, dass er reinigbar ist.

13. Abstandsmessgerät nach einem der vorangegangenen Ansprüche,
**dadurch gekennzeichnet,**
**dass** die das Kugelkopfelement (50) und die Sensoreinheit (60) umfassende Baugruppe einen Anschlussbereich (59) für ein Justageelement umfasst, wobei der Anschlussbereich (59) bevorzugt eine Aufnahme mit einem nicht-runden Querschnitt umfasst.

14. Abstandsmessgerät nach Anspruch 13,
**dadurch gekennzeichnet,**
**dass** das Kugelkopfelement (50) den Anschlussbereich (59) für das Justageeelement umfasst.

15. Abstandsmessgerät nach einem der vorangegangenen Ansprüche,
**dadurch gekennzeichnet,**
**dass** der Träger (40) die Sensoreinheit (60) von mehreren Seiten gehäuseförmig umgibt.

16. Abstandsmessgerät nach einem der vorangegangenen Ansprüche,
**dadurch gekennzeichnet,**
**dass** die Sensoreinheit (60) einen in Messrichtung ausgerichteten Signaldurchtrittsbereich (65) aufweist und der Signaldurchtrittsbereich (65) entweder bündig zu der benachbarten Kontur des Trägers (40) liegt oder um einen Abstand in Richtung des Inneren des Abstandsmessgeräts (30) versetzt ist.

17. Abstandsmessgerät nach Anspruch 6 oder 7,
**dadurch gekennzeichnet,**
**dass** das Abstandsmessgerät (30) bei einer vertikal nach oben gerichteten Ausrichtung der Messrichtung an den die Sensoreinheit (60) umgebenden Seiten im unteren Bereich zumindest eine Öffnung größeren Querschnitts umfasst als eine oder mehrere Öffnungen im oberen Bereich.

18. Abstandsmessgerät nach einem der vorangegangenen Ansprüche,
**dadurch gekennzeichnet,**
**dass** die Sensoreinheit (60) eingerichtet ist, ein optisches oder akustisches Messsignal auszusenden und einen Messaufnehmer umfasst, um Eigenschaften von dem an einem Gegenstand reflektierten Messsignals aufzunehmen und ein elektronisches Ergebnissignal bereitzustellen, welches ein Maß für den Abstand des Gegenstands von der Sensoreinheit (60) ist.

19. Industrielles Fahrzeug, insbesondere Flurförderzeug (10), mit einem am Fahrzeug befestigten Hubgerüst (20, 22) zum Heben und
Senken eines Lastaufnahmemittels (24) und mit einem Abstandsmessgerät (30) gemäß einem der vorangegangenen Ansprüche, das eingerichtet ist, den Abstand zwischen dem
Lastaufnahmemittel (24) und einem nicht heb- oder senkbaren Bereich (22) des Hubgerüstes oder des Fahrzeugs zu messen.

## Claims

1. Distance measurement device (30), in particular for measuring the height of a load holding means (24) of an industrial truck (10), wherein the distance measurement device (30) comprises a carrier (40) in which a sensor unit (60) is accommodated, wherein the sensor unit (60) is mounted with respect to the carrier (40) by means of a spherical head bearing (52, 50, 42),
**characterized**
**in that** the sensor unit (60) is accommodated in a sensor carrier (62) which has a spherical head element (50) which is mounted in the carrier (40).

2. Distance measurement device according to Claim 1,
**characterized**
**in that** the orientation of the sensor carrier (62) can be adjusted by means of at least one actuating element (76) which connects the sensor carrier (62) and the carrier (40).

3. Distance measurement device according to Claim 2,
**characterized**
**in that** two actuation elements (76) are arranged offset by an angle, in particular by 90°, with respect to the centre point of the spherical head element (50).

4. Distance measurement device according to Claim 2 or 3,
**characterized**
**in that** the actuation element (76) is a screw (77).

5. Distance measurement device according to Claim 4,
**characterized**
**in that** the screw (77) is mounted with a spherical head (85) in the sensor carrier (62), in particular in a sliding block (83) which is displaceably arranged in the sensor carrier (62).

6. Distance measurement device according to one of Claims 1 to 5,
**characterized**
**in that** the sensor carrier (62) comprises a housing (70) which encloses the sensor unit (60).

7. Distance measurement device according to Claim 6,
**characterized**
**in that** the housing (70) has an opening (71) for a signal passage region (65) of the sensor unit (60).

8. Distance measurement device according to one of Claims 1 to 7,
**characterized**
**in that** the carrier (40) is divided horizontally and has an upper part (72) which is screwed to a lower part (73).

9. Distance measurement device according to one of Claims 1 to 8,
**characterized**
**in that** the spherical head element (50) can be clamped tight in the carrier (40) by means of a screw (75) which is aligned radially with the spherical head element (50).

10. Distance measurement device according to Claim 1,
**characterized**
**in that** the spherical head bearing (52, 50, 42) comprises a spherical head element (50) which is at least partially in the form of a spherical surface and is connected to the sensor unit (60), and a clamping piece (52), for securing the spherical head element (50) in a frictionally locking fashion relative to the carrier (40) is attached to the carrier (40).

11. Distance measurement device according to Claim 10,
**characterized**
**in that** the clamping piece (52) is attached to the carrier (40) by means of a clamping means (54, 57), in particular a screwed clamping arrangement.

12. Distance measurement device according to one of the preceding claims,
**characterized**
**in that** the sensor unit (60) comprises an encapsulated housing with a signal passage region (65), and in that the signal passage region (65) is accessible from the outside in such a way that it can be cleaned.

13. Distance measurement device according to one of the preceding claims,
**characterized**
**in that** the assembly which comprises the spherical head element (50) and the sensor unit (60) comprises a connecting region (59) for an adjustment element, wherein the connecting region (59) preferably comprises a receptacle with a non-round cross section.

14. Distance measurement device according to Claim 13,
**characterized**
**in that** the spherical head element (50) comprises the connecting region (59) for the adjustment element.

15. Distance measurement device according to one of the preceding claims,
**characterized**
**in that** the carrier (40) surrounds the sensor unit (60) from a plurality of sides in the form of a housing.

16. Distance measurement device according to one of the preceding claims,
**characterized**
**in that** the sensor unit (60) has a signal passage region (65) which is aligned in the measuring direction, and the signal passage region (65) is either located flush with the adjacent contour of the carrier (40) or is offset by a distance in the direction of the interior of the distance measurement device (30).

17. Distance measurement device according to Claim 6 or 7,
**characterized**
**in that** in the case of a vertically upwardly directed alignment of the measurement device on the sides surrounding the sensor unit (60), the distance measurement device (30) comprises in the lower region at least one opening with a larger cross section than one or more openings in the upper region.

18. Distance measurement device according to one of the preceding claims,
**characterized**
**in that** the sensor unit (60) is configured to emit an optical or acoustic measurement signal and comprises a measuring sensor in order to sense properties of the measurement signal reflected at an object and to make available an electronic result signal which is a measure for the distance of the object from the sensor unit (60).

19. Industrial vehicle, in particular industrial truck (10), having a lifting frame (20, 22) which is attached to the vehicle and has the purpose of lifting and lowering a load holding means (24) and having a distance measurement device (30) according to one of the preceding claims, which distance measurement device (30) is configured to measure the distance between the load holding means (24) and a region (22) of the lifting frame or of the vehicle which cannot be raised or lowered.

## Revendications

1. Appareil de mesure de distance (30), en particulier destiné à effectuer une mesure de hauteur d'un moyen de réception de charge (24) d'un chariot de manutention (10), dans lequel l'appareil de mesure de distance (30) comprend un support (40) dans lequel est reçue une unité à capteur (60), dans lequel l'unité à capteur (60) est montée par l'intermédiaire d'un palier à tête sphérique (52, 50, 42) par rapport au support (40),
**caractérisé en ce que** l'unité à capteur (60) est reçue dans un support de capteur (62) comportant un élément à tête sphérique (50) qui est monté dans le support (40).

2. Appareil de mesure de distance selon la revendication 1,
**caractérisé en ce que** l'orientation du support de capteur (62) peut être réglée au moyen d'au moins un élément de réglage (76) qui relie le support de capteur (62) au support (40).

3. Appareil de mesure de distance selon la revendication 2,
**caractérisé en ce que** deux éléments de réglage (76) sont disposés de manière décalée d'un certain angle par rapport au centre de l'élément à tête sphérique (50), en particulier de 90°.

4. Appareil de mesure de distance selon la revendication 2 ou 3,
**caractérisé en ce que** l'élément de réglage (76) est une vis (77).

5. Appareil de mesure de distance selon la revendication 4,
**caractérisé en ce que** la vis (77) est montée dans le support de capteur (62) à l'aide d'une tête sphérique (85), en particulier dans un coulisseau (83) qui est disposé de manière à pouvoir être déplacé dans le support de capteur (62).

6. Appareil de mesure de distance selon l'une quelconque des revendications 1 à 5,
**caractérisé en ce que** le support de capteur (62) comprend un boîtier (70) qui enserre l'unité à capteur (60).

7. Appareil de mesure de distance selon la revendication 6,
**caractérisé en ce que** le boîtier (70) présente une ouverture (71) destinée à une zone de traversée de signal (65) de l'unité à capteur (60).

8. Appareil de mesure de distance selon l'une quelconque des revendications 1 à 7,
**caractérisé en ce que** le support (40) est divisé horizontalement et comporte une partie supérieure (72) qui est vissée à une partie inférieure (73).

9. Appareil de mesure de distance selon l'une quelconque des revendications 1 à 8,
**caractérisé en ce que** l'élément à tête sphérique (50) peut être bloqué dans le support (40) par l'intermédiaire d'une vis (75) orientée vers l'élément à tête sphérique (50).

10. Appareil de mesure de distance selon la revendication 1,
**caractérisé en ce que** le palier à tête sphérique (52, 50, 42) comprend un élément à tête sphérique (50) présentant au moins dans certaines zones une forme de surface sphérique et relié à l'unité à capteur (60) et **en ce qu'**une pièce de serrage (52) est fixée au support (40) pour maintenir par complémentarité de force l'élément à tête sphérique (50) par rapport au support (40).

11. Appareil de mesure de distance selon la revendication 10,
**caractérisé en ce que** la pièce de serrage (52) est fixée au support (40) à l'aide d'un moyen de serrage (54, 57), en particulier, d'un système de vis de serrage.

12. Appareil de mesure de distance selon l'une quelconque des revendications précédentes,
**caractérisé en ce que** l'unité à capteur (60) comprend un boîtier encapsulé ayant une zone de traversée de signal (65) et **en ce que** la zone de traversée de signal (65) est accessible de l'extérieur de manière à pouvoir être nettoyée.

13. Appareil de mesure de distance selon l'une quelconque des revendications précédentes,
**caractérisé en ce que** l'ensemble comprenant l'élément à tête sphérique (50) et l'unité à capteur (60) comprend une zone de raccordement (59) destinée à un élément d'ajustage, dans lequel la zone de raccordement (59) comprend de préférence un réceptacle ayant une section transversale non circulaire.

14. Appareil de mesure de distance selon la revendication 13,
**caractérisé en ce que** l'élément à tête de sphérique (50) comprend la zone de raccordement (59) destinée à l'élément d'ajustage.

15. Appareil de mesure de distance selon l'une quelconque des revendications précédentes,
**caractérisé en ce que** le support (40) entoure de plusieurs côtés l'unité à capteur (60) en formant un boîtier.

16. Appareil de mesure de distance selon l'une quelconque des revendications précédentes,
**caractérisé en ce que** l'unité à capteur (60) présente une zone de traversée de signal (65) orientée dans la direction de mesure et **en ce que** la zone de traversé de signal (65) est soit disposée de manière solidaire du contour voisin du support (40), soit décalée d'une certaine distance dans la direction de l'appareil de mesure de distance (30).

17. Appareil de mesure de distance selon la revendication 6 ou 7,
**caractérisé en ce que** l'appareil de mesure de distance (30) comprend au moins une ouverture ayant une section transversale plus importante que celle d'une ou plusieurs ouvertures se trouvant dans la zone supérieure lorsque la direction de mesure est orientée verticalement vers le haut, sur les côtés entourant l'unité à capteur (60), dans la zone inférieure.

18. Appareil de mesure de distance selon l'une quelconque des revendications précédentes,
**caractérisé en ce que** l'unité à capteur (60) est conçue pour émettre un signal de mesure optique ou acoustique et comprend un dispositif d'acquisition de mesure permettant d'acquérir des propriétés du signal de mesure réfléchi par un objet et de fournir un signal de résultat électronique qui est une mesure de la distance

19. Véhicule industriel, en particulier chariot de manutention (10) muni d'une structure de levage (20, 22) fixée au véhicule et destinée à soulever et abaisser un moyen de réception de charge (24) et muni d'un appareil de mesure de distance (30) selon l'une quelconque des revendications précédentes, qui est conçu pour mesurer la distance entre le moyen de réception de charge (24) et une zone pouvant être soulevée ou abaissée (22) de la structure de levage ou du véhicule.
